# EUROPEAN PATENT SPECIFICATION

(11) **EP 4 048 648 B1**
(45) Date of publication and mention of the grant of the patent: **18.03.2026**
(21) Application number: 20800251.9
(22) Date of filing: 22.10.2020
(51) Int. Cl.: C05D 1/00, C05D 3/00, C05D 5/00, C05G 1/00, C05G 5/35, C05G 5/40, C05C 9/00

(54) **COMPOSITE FERTILISER SYSTEMS**
VERBUNDDÜNGERSYSTEME
SYSTÈMES D'ENGRAIS COMPOSITES

(30) Priority: 25.10.2019 GB 201915510
(43) Date of publication of application: 31.08.2022
(73) Proprietor: Anglo American Woodsmith Limited, London EC1N 6RA (GB)
(72) Inventor: LEWIS, Timothy David, Scarborough Yorkshire YO11 3ZB (GB); MEAKIN, Robert John, Scarborough Yorkshire YO11 3ZB (GB)
(74) Representative: Slingsby Partners LLP
(86) International application number: PCT/GB2020/052654
(87) International publication number: WO 2021/079117

(56) References cited:
- WO-A1-2015/185907
- CN-A- 101 575 243
- GB-A- 1 189 398
- GB-A- 1 226 646
- US-A1- 2013 259 582
- US-A1- 2018 327 328

## Description

This invention relates to the composition of a fertiliser product as defined in the appended claims.

A common way to supplement the nutrients that are available to plants is to treat a seedbed, field or other growing medium with fertiliser products in the form of agglomerated granules, pellets or prills. Granulated, pelletised or prilled products can have the advantages of being stable, easy to spread using conventional horticultural or agricultural machinery, and readily dispensed at a desired application rate.

A wide range of fertiliser compositions are available. The effectiveness of a particular fertiliser composition depends on factors including the type of plants for which it is used, the state of maturity of the plants, the existing state of the growing medium, and the environmental conditions.

Key plant nutrients include nitrogen, phosphorus, potassium, magnesium, calcium and sulphur. In a fertiliser composition these individual nutrient elements may be incorporated through their inclusion in any of a number of chemical compounds. Although different compounds may include the same underlying nutrient element the bioavailability of those nutrient elements may differ depending on the mechanism by which the compound breaks down. The nutrients' bioavailability may also vary as a result of other aspects of the fertiliser's chemical or mechanical formulation. For example, some fertiliser products may incorporate coatings or binders that break down slowly in order to delay the release of nutrients, some compounds may rely on microbiota in the growing medium in order to release their nutrient elements and some compositions may make nutrients available in a chelated form so as to improve their uptake.

In order to provide multiple nutrients a grower may apply multiple distinct fertiliser compositions or alternatively a single multi-nutrient fertiliser composition. In order for a multi-nutrient composition to be effective its constituent compounds must be in suitably balanced proportions and must be capable of acting effectively even in the presence of the other constituents. This effectiveness may rely on factors other than the contents of the fertiliser: for example the presence of environmental water, heat or certain microbiota. The effectiveness on plants of multiple-nutrient fertilisers, particularly when dependent on environmental factors, is difficult to predict. However, if a multi-nutrient fertiliser composition is effective then it has the advantage that it requires only a single spreading operation to apply it to a crop.

Urea (CO(NH₂)₂) is commonly used as a nitrogen fertiliser. Urea can be made synthetically and then formed into prills or granules for spreading over a crop. US 5,849,060 discloses using urea as the nucleus for a fertiliser pellet, with a coating of, for example, a phosphate or hydroxide.

It is known to form urea into fertiliser prills and granules and to form limestone into pellets for dressing to increase soil pH. For example, this can be done by prilling urea and by mixing powdered limestone with a binder and then processing by pan granulation.

Certain minerals, particularly evaporite minerals, can be used as sources of nutrients such as potassium, calcium, magnesium and sulphur. For example, Gypsum can be pelletised and used as a source of calcium and sulphur.

Polyhalite is an evaporite mineral. It is a complex hydrateds sulphate of potassium, calcium and magnesium of general formula K₂Ca₂Mg(SO₄)₄·2H₂O. Deposits of polyhalite occur in, amongst other countries, Austria, China, Germany, India, Iran, Turkey, Ukraine, the UK and the USA.

Polyhalite has the capacity to be valuable as a source of agricultural fertiliser. In some prior art processes it has been proposed to decompose natural polyhalite to extract specific nutrients. See, for example, WO 2013/074328, US 1,946,068 and US 4,246,019. However, intact polyhalite is also usable as a fertiliser, being able to supply sulphur, potassium, calcium and magnesium to the soil.

Mineral polyhalite can be spread in raw, crushed form. That minimises processing costs, but it has a number of disadvantages. Once applied to the soil the raw mineral takes some time to break down, delaying the bioavailability of its constituents. If applied in chipped form, the polyhalite tends to be of irregular shape and size, meaning that there can be difficulties in applying it uniformly, and meaning that it can be difficult to apply using some types of agricultural spreading machinery. Powdered polyhalite is difficult to spread evenly in an agricultural application, and since polyhalite powder can be hygroscopic its mechanical properties can vary quickly and radically over time once exposed to air.

It would be desirable to have a fertiliser product which is readily spread and provides a number of nutrients in a manner that is particularly beneficial to plants.

CN101575243 discloses a method for producing a calcium-magnesium-sulfur coated slow release fertilizer.

GB1226646 relates to a fertilizer product based on ammonium nitrate.

US2018/327328 discloses fertiliser pellet comprising: a first region of a nitrogen-providing fertiliser composition; and a second region adhered to the exterior of the first region, the second region comprising a fertiliser composition capable of providing (a) two or more alkali metal and/or alkaline earth metal nutrients and (b) sulphur.

GB1189398 relates to a process for producing a NK fertilizer.

US2013/259582 relates to a soil adherent pellet and in particular to a pellet that upon contact with clay deforms and adheres thereto with the delivery of associated ingredients to the soil with reduced active ingredient runoff.

WO 2015/185907 A1 discloses further fertilizer pellets comprising at least 80 wt% of an evaporite mineral such as polyhalite.

According to a first aspect of the present invention there is provided a fertiliser product in the form of a pellet, granule or prill, according to claim 1.

The fertiliser product comprises a first region comprising the first fertiliser composition; and a second region adhered to the exterior of the first region, the second region comprising the second fertiliser composition. The first region may be in the form of a granule of the first fertiliser composition. The second region may contact the first region over substantially the whole of its interface to the first region. The second region substantially surrounds the first region. The first region may be the only region of the fertiliser product that comprises the first fertiliser composition.

The fertiliser product may comprise a plurality of first regions comprising the first fertiliser composition, the first regions may be dispersed throughout the second fertiliser composition. The plurality of first regions may be each in the form of granules of the first fertiliser composition. The second region may contact the plurality of first regions over substantially the whole of the second region's interfaces with the plurality of first regions. The second region may substantially surround the plurality of first regions.

The first and second fertiliser compositions may form a homogeneous blend of the first and second fertiliser compositions.

The said alkali metal and/or alkaline earth metal nutrients comprise potassium, calcium and magnesium. The sulphur is in the form of sulphate.

The first fertiliser composition may be a mineral powder. The first fertiliser composition may be a chipped mineral. The first fertiliser composition is polyhalite.

The second fertiliser composition may comprise more than 30% by weight of nitrogen. The second fertiliser composition may be urea. The fertiliser product may comprise less than 60% by weight of the first fertiliser composition. The fertiliser product may comprise between 20% and 40% by weight of the first fertiliser composition. The fertiliser product may comprise more than 40% by weight of the second fertiliser composition. The fertiliser product may comprise between 60% and 80% by weight of the second fertiliser composition.

According to a second aspect of the present invention there is provided a bulk fertiliser product comprising a plurality of the fertiliser products as herein described. According to a third aspect of the present invention there is provided a bulk fertiliser product wherein at least 50% of the fertiliser products are the fertiliser products as herein described.

The present invention will now be described by way of example with reference to the accompanying drawings. In the drawings:
Figure 1 shows a view of a composite fertiliser product.
Figure 2 shows a cut-away view of a first composite fertiliser product.
Figure 3 shows a cut-away view of a second composite fertiliser product.

The following description is presented to enable any person skilled in the art to make and use the invention, and is provided in the context of a particular application. Various modifications to the disclosed embodiments will be readily apparent to those skilled in the art. The scope of the invention is defined by the appended claim.

The fertiliser product to be described below is composed of solid pellets, granules or prills.

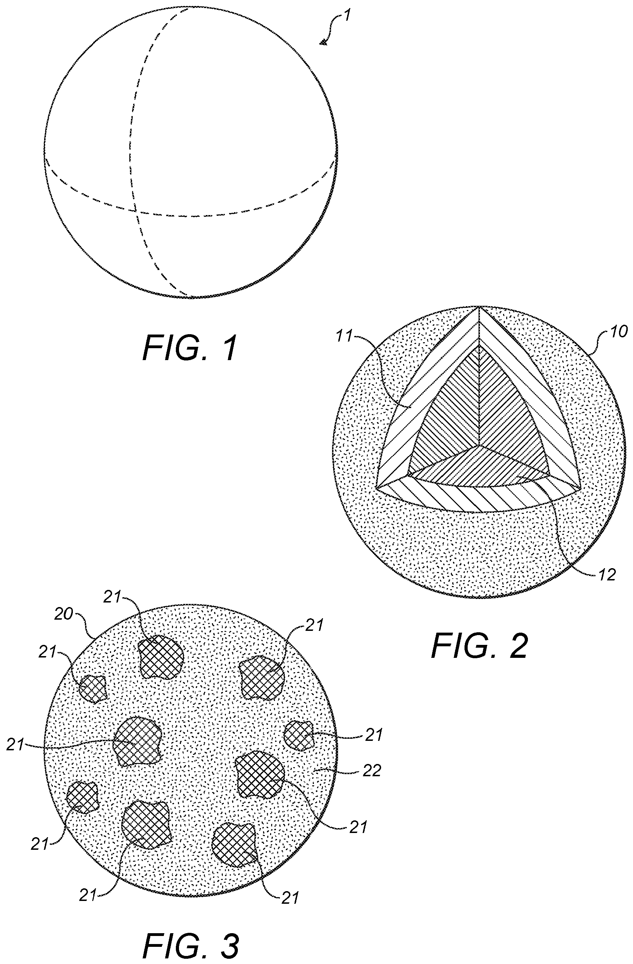

The present invention relates to a fertiliser product in the form of a pellet, granule or prill comprising a first fertiliser composition and a second fertiliser composition. The first fertiliser composition is capable of providing (a) two or more alkali metal and/or alkaline earth metal nutrients and (b) sulphur. The second fertiliser composition is a nitrogen-providing fertiliser composition. The first fertiliser composition is incorporated into the second fertiliser composition. Thus, the first fertiliser composition is mixed with the second fertiliser composition. Figure 1 shows an example of the fertiliser product 1. The fertiliser product 1 comprises a mixture of the fertiliser compositions. The dotted lines indicate the generally spherical nature of the fertiliser product 1. The fertiliser products can be spread on crops, on a seedbed or similar to act as a plant fertiliser.

In a first preferred example, each fertiliser product comprises a core that comprises the first fertiliser composition over which is a layer that comprises the second fertiliser composition. Figure 2 shows an example of the first preferred example fertiliser product. The fertiliser product 10 comprises a core 11 that comprises the first fertiliser composition. Over the core 11 is a layer 12 that comprises the second fertiliser composition. The core 11 is a first region of the fertiliser product. The core may be in the form of a granule that comprises the first fertiliser composition to which the second fertiliser composition is adhered. The core 11 may be in the form of crushed rock that comprise the first fertiliser composition to which the second fertiliser composition is adhered. The core 11 may be in the form of an agglomerated powder that comprises the first fertiliser composition to which the second fertiliser composition is adhered. The agglomerated powder may be a granule. The layer 12 substantially surrounds the core 11. The layer 12 contacts the core over substantially the whole of the interface between the layer 12 and the core 11. In some cases, the layer 12 may not fully cover the core 11 and so part of the core 11 may be exposed to the exterior of the fertiliser product. In other cases, the layer 12 may fully cover the core 11. The core 11 may be the only region of the fertiliser product that comprises the first fertiliser composition. It will be appreciated that trace amounts of the first fertiliser composition may be dispersed throughout the layer 12 and therefore the core 11 being the only region of the fertiliser product that comprises the first fertiliser composition may mean that the core 11 includes substantially all of the first fertiliser composition comprised within the fertiliser product 10.

In a second preferred example, each fertiliser product comprises a plurality of regions that comprise the first fertiliser composition. These regions of the first fertiliser composition are dispersed throughout of the second fertiliser composition. Figure 3 shows an example of the second preferred example fertiliser product. Figure 3 shows a cut through view of the fertiliser product to illustrate the different regions. The fertiliser product 20 comprises a plurality of first regions 21 that comprise the first fertiliser composition. The first regions are dispersed throughout the second fertiliser composition 22. It will be appreciated that in figure 3 the relative sizes of the first regions to the size of fertiliser product and the number of first regions are illustrative to show the content of the fertiliser product. The first regions may be more or less numerous than that shown in figure 3 and be smaller or larger than that shown in figure 3.

The second fertiliser composition 22 is adhered to the regions 21 of the first fertiliser composition. The first regions 21 may be in the form of granules that comprise the first fertiliser composition to which the second fertiliser composition is adhered. The first regions 21 may be in the form of crushed rock that comprise the first fertiliser composition to which the second fertiliser composition is adhered. The first regions 21 may be in the form of a powder that comprises the first fertiliser composition to which the second fertiliser composition is adhered. The powder may have been agglomerated into granules of the first fertiliser composition.

The second fertiliser composition 22 may bind the first regions 21 of the first fertiliser composition together. The second fertiliser composition 22 substantially surrounds the plurality of first regions. The second fertiliser composition 22 contacts the plurality of first regions over substantially the whole of the interface between the first regions and the second fertiliser composition. The first regions 21 of the first fertiliser composition may be encapsulated within the fertiliser product by the second fertiliser composition 22. In some cases, the second fertiliser composition 22 may not fully cover the first regions 21 and so at least one of the first regions 21 may be exposed to the exterior of the fertiliser product. In other cases, the second fertiliser composition 22 may fully cover all of the first regions 21. The first regions 21 may be the only regions of the fertiliser product that comprise the first fertiliser composition. It will be appreciated that trace amounts of the first fertiliser composition may be dispersed throughout the region of the fertiliser product that is generally composed of the second fertiliser composition and therefore the first regions 21 being the only regions that comprise the first fertiliser composition may mean that the first regions 21 include substantially all of the first fertiliser composition comprised within the fertiliser product 20.

In each of the first and second preferred examples, the first fertiliser composition may be incorporated into the fertiliser product so that the first fertiliser composition is not exposed to the exterior surface of the fertiliser product. In this way, the first fertiliser composition may be enveloped by at least the second fertiliser composition. As the first fertiliser composition is included in the fertiliser product in one or more regions, the first and second fertiliser compositions do not form a generally homogeneous blend within the fertiliser product.

The first fertiliser composition is polyhalite. Polyhalite is principally a source of potassium, magnesium, calcium and sulphur. In a preferred example, the second fertiliser composition is urea. Urea is a source of nitrogen. Studies undertaken by the applicant indicate that providing fertilisers that have an outer layer of urea and at least one inner region of polyhalite can be beneficial for plant growth and handling of the fertiliser products. The inclusion of polyhalite can increase the crush strength of the fertiliser products and assist in the reduction of dust generated by the fertiliser products in transport. The combination of polyhalite with urea means that a broad range of nutrients are delivered. The degradation of the urea leads to nitrogen being released and then the polyhalite can provide a broad range of nutrients which support balanced growth. In addition, polyhalite supplies sulphur in an immediately available form for plant uptake and metabolism and naturally occurring polyhalite can often contain additional micronutrients which are helpful in the early stages of plant growth.

The fertiliser products comprise more than 20% of the first fertiliser composition by weight, and may comprise more than 30% of the by weight, more than 40% of the first fertiliser composition by weight, more than 50% of the first fertiliser composition by weight, more than 60% of the first fertiliser composition by weight, up to 70% of the first fertiliser composition by weight wherein said first fertiliser composition is polyhalite. Preferably the fertiliser product may comprise less than 60% of the first fertiliser composition by weight and more preferably between 20% and 40% of the first fertiliser composition by weight. In addition to the first fertiliser composition, the product may contain a binder and/or other constituents. These constituents may be homogeneously dispersed throughout the first fertiliser composition.

The fertiliser product comprises more than 30% of the second fertiliser composition by weight, and may comprise more than 40% of the second fertiliser composition by weight, more than 50% of the second fertiliser composition by weight, more than 60% of the second fertiliser composition by weight, more than 70% of the second fertiliser composition by weight, up to 80% of the second fertiliser composition by weight. Preferably the fertiliser product may comprise more than 40% of the second fertiliser composition by weight and more preferably up to 40% of the second fertiliser composition by weight. The fertiliser product may comprise more than 20% of urea by weight, more than 30% of urea by weight, more than 40% of urea by weight, more than 50% of urea by weight, more than 60% of urea by weight, more than 70% of urea by weight, more than 80% of urea by weight. Preferably the fertiliser product may comprise more than 40% of urea by weight and more preferably between 60% and 80% of urea by weight. In addition to the second fertiliser composition, the fertiliser product may contain a binder and/or other constituents. These constituents may be homogeneously dispersed throughout the second fertiliser composition.

The core may be of any desired shape, but conveniently it is substantially spherical. For example, it may have a Wadell sphericity of 0.9 or above. Where more than one first region is present, each first region may be substantially spherical. For example, it may have a Wadell sphericity of 0.9 or above.

The size of the core, or each first region, may be such that it has a largest dimension less than 5mm, less than 4mm, less than 3mm, less than 2mm or less than 1mm. The size of the core, or each first region, may be such that it has a smallest dimension greater than 4mm, greater than 3mm, greater than 2mm, greater than 1mm or greater than 0.5mm. The volume of the core, or each first region, may be less than 20mm³, less than 15mm³, less than 10mm³, less than 8mm³ or less than 5mm³. The volume of the core, or each first region may be greater than 15mm³, greater than 10mm³, greater than 8mm³, greater than 5mm³ or greater than 1mm³. Other dimensions could be adopted.

Preferably the coating layer of the second fertiliser composition entirely covers the inner region or core or each of the plurality of first regions. In a bulk product the core or plurality of first regions may be entirely covered by the outer layer in, for example, more than 90%, more than 95% or more than 99% of the fertiliser products of the bulk product.

Preferably the outer layer is in contact with the majority of the outer surface of the inner region or plurality of first regions. Alternatively there may be an intermediate layer between the inner region or plurality of first regions and the outer layer. Such an intermediate layer may be a layer of a binder and/or adhesive such as PVA or starch.

Preferably the outer layer is of a substantially uniform thickness. The maximum thickness of the outer layer may be less than 5mm, less than 4mm, less than 3mm, less than 2mm, less than 1mm or less than 0.5mm. The minimum thickness of the outer layer may be greater than 4mm, greater than 3mm, greater than 2mm, greater than 1mm, greater than 0.5mm or greater than 0.1mm. The volume of the outer layer may be less than 20mm³, less than 15mm³, less than 10mm³, less than 8mm³ or less than 5mm³. The volume of the outer layer may be greater than 15mm³, greater than 10mm³, greater than 8mm³, greater than 5mm³ or greater than 1mm³. Other dimensions could be adopted.

The fertiliser product, with or without the core and outer layer structure, may be of any desired shape, but conveniently it is substantially spherical. For example, it may have a Wadell sphericity of 0.9 or above. The size of the fertiliser product may be such that it has a largest dimension less than 10mm, less than 7mm, less than 6mm, less than 5mm or less than 4mm. The size of the fertiliser product may be such that it has a smallest dimension greater than 6mm, greater than 5mm, greater than 4mm, greater than 3mm or greater than 1mm. The volume of the fertiliser product may be less than 70mm³, less than 60mm³, less than 50mm³, less than 40mm³ or less than 30mm³. The volume of the fertiliser product may be greater than 20mm³, greater than 30mm³, greater than 40mm³, greater than 50mm³ or greater than 60mm³. Other dimensions could be adopted.

The size of the fertiliser product and, in the cases that they are present, the relative sizes of the core or plurality of first regions and the outer layer can be selected for best performance in the environmental conditions and on the crop for which the fertiliser is intended.

In the case of a fertiliser in bulk, the values given above for the sizes, shapes and relationship between the core or plurality of first regions and the outer layer may be mean or median values over the bulk. Alternatively, greater than 50%, greater than 80% or greater than 90% of the particles of the bulk fertiliser may be taken to have the requisite value(s). In the case of a fertiliser in bulk, the values given above for the size and shape of the fertiliser product itself may be mean or median values over the bulk. Alternatively, greater than 50%, greater than 80% or greater than 90% of the particles of the bulk fertiliser may be taken to have the requisite value(s).

There could be a coating over the exterior of the first and second fertiliser mixture, or the exterior of the fertiliser product. That could, for example, be a sealant (e.g. to resist breakdown of the fertiliser product in transit) or a lubricant (e.g. to assist in spreading of the fertiliser product). The coating could be water-soluble so that it degrades readily when the fertiliser product is spread on a crop or growing medium.

As indicated above, polyhalite is a complex hydrated sulphate of potassium, calcium and magnesium of general formula K₂Ca₂Mg(SO₄)₄·2H₂O. Polyhalite has a Moh's hardness of around 2.5 to 3.5. Polyhalite can be extracted from natural reserves by mining. As-mined polyhalite may be intimately combined with other minerals which form impurities in the polyhalite. These other minerals are preferable in low proportions (e.g. less than 25%, less than 20%, less than 15%, less than 10% or less than 5% in good quality ore.) Once mined, the polyhalite may be broken into blocks or chips of suitable size for transport and processing. For example, the as-mined rock may be fed to crushers such as jaw crushers and/or cone crushers in order to yield a chipped material of generally uniform size. It has been found that chips of largest dimension no greater than around 20mm and/or of average dimension between 5 and 10mm are convenient for transportation from a mine. The chips can be transported by conveyor, trucks or any other convenient mechanism.

The raw or chipped polyhalite is processed to form a powder essentially of polyhalite. This may suitably be done using high pressure grinding roller (HPGR) equipment, or in a ball mill (e.g. a continuous "Hardinge" ball mill) or an attritor mill. The average grain size of the powder is dependent on various process parameters including the dwell time of the feedstock in the powdering equipment and the configuration of the powdering equipment. Oversized particles exiting the powdering equipment may be returned to the equipment for further processing. The desired powder size will depend on the nature of the subsequent processing steps, but it has been found that screening the output of the powdering process with a 500µm screen and accepting the material passing the screen for further processing yields good results. Oversized particles exiting the powdering equipment and not passing the screen may be returned to the powdering equipment for further processing. A convenient profile of the powder passed to the next step of the process is: 100% passing a 500µm screen and 80% (by mass) passing a 200µm screen. Conveniently at least 50% or more preferably at least 70% of the mass of the powder is composed of grains having a grain size, or a largest or average diameter, in the range from 1 to 400µm, and depending on the process used to process the polyhalite, more preferably less than 50µm or from 100 to 250µm. The grain size may be as measured by means of a Malvern Mastersizer 2000 or as measured by means of a sieve shaker.

Impurities in the mined rock may be separated before the mined rock is powdered. Alternatively, if the impurities are in reasonably low proportion to the desired mineral then it may be retained and powdered. Thus, the powdered polyhalite may comprise other minerals too.

As indicated above, urea is a source of nitrogen. To manufacture the fertiliser product described herein, a urea melt or urea solution is required together with the polyhalite powder. A urea melt is where urea has been heated to a temperature above the melting point of urea. A urea solution is where urea has been dispersed in a solvent to form a solution. Generally, a urea melt contains less than 0.5% by weight of water and a urea solution can have up to 50% by weight of the solution as the solvent, i.e. water.

A urea melt may be prepared by the melting of solid urea, e.g. urea prills, using a steam heater capable of achieving temperatures in excess of 133°C. Alternatively, a urea melt may be prepared by the reaction of liquid ammonia with gaseous carbon dioxide. The latter technique can be preferable to avoid introducing contaminants that might exist in solid urea. Once the urea melt has been produced, it is stored at a temperature above the melting point of urea to avoid solidification and/or crystalisation. The storage may be in a heated vessel. If other fertiliser compositions are used instead of urea for the nitrogen-providing fertiliser composition then the temperature may be different. For instance, ammonium nitrate needs to be heated to at least 170°C and potassium nitrate to at least 300°C.

A urea solution may be prepared by the addition of water to urea. The urea solution can be used at lower temperatures (e.g. between 20°C and 80°C) than the urea melt due to the high solubility of urea. The urea solution can be used directly or stored for later use as it is stable under ambient conditions.

The method by which the fertiliser products described herein are formed may depend on the ratio of polyhalite to urea present in the final fertiliser products. For instance, if the amount of polyhalite present in the fertiliser products is high relative to the amount of urea, a granulation technique may be employed to make the fertiliser products. If the amount of urea present in the prills is high relative to the amount of polyhalite, the polyhalite may first be dispersed in the urea prior to prilling.

In the case that granulation is used, urea melt or solution is added to polyhalite. Water may also be added to the mixture. A binder may also be added to the mixture. The amount of water and/or binder to be added will depend on the inherent water content of the polyhalite and urea melt/solution and the nature of the subsequent processing steps. Example binders are starch or flour or an adhesive such as PVA.

In the case that the fertiliser products are to have a homogeneous blend of polyhalite and urea, the polyhalite powder/urea mixture is mixed until it is homogeneous, and pelletised, granulated, or prilled. Polyhalite granules may be introduced instead of polyhalite powder in the case that the fertiliser products are to have one or more regions of polyhalite surrounded by urea.

In one approach, the polyhalite /urea mixture is mixed in a suitable mixer (e.g. a ribbon blender) and then pelletised in a suitable pelletiser (e.g. a pan pelletiser). In an alternative approach, which has been found to be efficient, the polyhalite powder/urea mixture is passed to equipment that can both mix and pelletise. An example of such equipment is an intensive mixer/granulator, e.g. as available from Maschinenfabrik Gustav Eirich GmbH & Co KG. A pelletiser may be configured to expel processed material as it operates, allowing it to run continuously. Alternatively, the pelletiser may operate on a batch basis, with material being processed according to a defined programme and then expelled en masse.

At completion of the pelletising process, the pellets are expelled from the pelletiser. The material expelled from the pelletiser can be screened to separate undersized or oversized pellets from pellets of a desired size range. The desired size range may, for example, be that which passes a 4mm screen but does not pass a 2mm screen. Alternatively, other sizes may be chosen as appropriate to the desired application. The outsized pellets may be recirculated. Any pellets that are oversize can be ground and then returned to the pelletiser. Undersize pellets can be returned directly to the pelletiser.

The output of the pelletiser is wet, substantially spherical pellets.

The pellets that meet the desired size are conveniently dried before packaging. To achieve this the pellets that have been output from the pelletiser can be passed to a drier. This can harden them. Pellets manufactured using polyhalite and urea may have a crush strength in excess of 1.0kgf and/or in excess of 3.0kgf. Moisture can be extracted from the dryer using a reverse jet air filter. The operating temperature and retention time in the dryer can be selected to provide pellets of the desired strength for subsequent handling.

In the case that dispersion prior to prilling is used, the urea melt/solution is transferred into a dispersing unit that comprises a vessel capable of maintaining a temperature high enough to ensure that the urea does not solidify. In the case of a urea melt, the temperature is in excess of 133°C. In either case, the temperature can be maintained by the introduction of super-heated steam or induction heating of the vessel. The polyhalite may also be heated prior to introduction into the urea melt/solution so as to avoid the polyhalite cooling the urea when it is introduced into the urea.

The polyhalite can be introduced into the vessel of the dispersing unit. The polyhalite may be introduced in powder form or in the form of granules that can be used to produce the one or more first regions in the final prills. The polyhalite may be introduced using a series of separate storage bins and conveyor belts above the dispersing unit. The polyhalite is allowed to disperse throughout the urea melt/solution in the vessel to form a slurry of the combination of urea and polyhalite.

Once the urea and polyhalite have combined, the urea-polyhalite slurry can be transferred into a vessel at the top of a prilling tower. The vessel comprises a plurality of holes in the bottom of the vessel. The vessel is spun to form a vortex which pushes the slurry through the holes. The urea-polyhalite slurry falls under gravity within the tower whilst an upward airflow moves through the inside of the tower. This airflow may be forced (i.e. by a fan) or a natural airflow caused by the pressure difference at the bottom and top of the tower. The descent due to gravity in the presence of the upward airflow causes the slurry to solidify into prills which pass through a scrubber at the bottom of the tower and onto a conveyor belt to cool further prior to subsequent handling.

Fertiliser products made by either of the above described processes may be subjected to additional processing to finish the fertiliser products to ensure that their physical and/or chemical characteristics are maintained. The fertiliser products may be coated with one or more additives. For instance, the fertiliser products may be coated with a sealant agent that can help condition the fertiliser products without affecting its nutrient composition or release of nutrients. The sealant agent may assist in the control of fine particulates that could become airborne during handling for form dust, reduce caking of the fertilisers, lower breakage of a pellet, granule or prill, slow nutrient release and/or prevent moisture uptake. The fertiliser products may also be coated with a chemical agent that forms a barrier between the main pellet, granule or prill and the exterior. This chemical agent may inhibit the breakdown of urea into undesirable compounds that then are are not immediately available to a crop and potentially lost to the environment through leaching or volatilisation. The coating may be undertaken may adhering a fine powder to the fertiliser products or spraying a liquid on to the fertiliser products.

Once the composite fertiliser products have been formed they may then be screened to separate out under-size and over-size fertiliser products. The undersize fertiliser products can be returned to an earlier step of the process. The fertiliser products may be crushed before reintroduction.

Finally, the in-size fertiliser products can be cooled and packaged, for example in 600kg bags or 25kg sacks, or shipped loose for use or further processing elsewhere. The fertiliser products can be supplied for agricultural use. Eventually they can be spread on a field or other agricultural or horticultural substrate to act as a fertiliser. The composite fertiliser products may be used for purposes other than fertilisation.

Other additives may be included in the fertiliser products. Such additives may one or more of the following, in any combination:
- a component having the effect of chemically and/or mechanically stabilising and/or preserving the fertiliser products: for example to increase their shelf life, reduce their susceptibility to environmental contaminants or to reduce the likelihood of them being broken up during spreading (e.g. a pH buffer);
- a component having the effect of enhancing the fertilising effect of the polyhalite and/or the urea: for example by accelerating or retarding the breakdown of the polyhalite and/or urea in the field;
- a component having the effect of protecting or enhancing the growth of crops by means other than fertilising: for example a herbicide, fungicide, insecticide, rodenticide, hormone, plant stimulant or mycorrhizal fungus or spore;
- a seed: which may be a seed of an angiosperm, gymnosperm and/or of a crop species (e.g. a cereal such as wheat, maize, rice, millet, barley, oats or rye);
- a further fertiliser composition providing macro or micronutrients in addition to the polyhalite and urea;
- a pigment;
- a component having the effect of altering soil pH: for example lime or sulphur.

Such a component may be added at any suitable stage in the process. For example it could be combined with the polyhalite prior to or during a mixing stage as described above, or with the polyhalite/urea mix, or it could be added to the dispersing unit, or it could be sprayed or otherwise coated on to the fertiliser products before or after drying.

The composite fertiliser products are preferably substantially free from voids, for example having not more than 1%, 2% or 5% by volume of air.

The process as described above may further be used for producing fertiliser products with that have a first fertiliser compound other than polyhalite, and in particular for producing fertiliser products with a first fertiliser compound composed principally of one or more evaporite minerals, especially other chloride minerals. These may include any one or more of Anhydrite, Carnalite, Gypsum, Halite, Kainite, Kieserite, Langbeinite and/or Sylvite.

In examples given above, the second fertiliser compound described as being urea. The second fertiliser compound may be based on a nitrogen-providing composition other than urea. Examples include ammonia-based compositions and other nitrate-based compositions. For instance, ammonium nitrate or potassium nitrate. The second fertiliser compound comprises greater than 30% or preferably greater than 40% nitrogen by weight.

Where a property is specified above in respect of a single fertiliser product, that criterion may be applied in the case of a bulk fertiliser product as (i) the mean value over the bulk, (ii) the median value over the bulk, or (iii) by more than 50% or more than 80% of the fertiliser product of the bulk fertiliser having the requisite property.

## Claims

1. A fertiliser product (10, 20) in the form of a pellet, granule or prill, the fertiliser product comprising:
a first region (11, 21) comprising a first fertiliser composition, wherein the first fertiliser composition is polyhalite; and
a second region (12, 22) adhered to the exterior of the first region, the second region (12, 22) substantially surrounding the first region (11, 21), the second region (12, 22) comprising a second fertiliser composition, the second fertiliser composition being a nitrogen-providing fertiliser composition, and the first fertiliser composition being incorporated into the second fertiliser composition;
wherein the fertiliser product comprises more than 20% by weight of the first fertiliser composition, and wherein the fertiliser product comprises more than 30% by weight of the second fertiliser composition.

2. A fertiliser product (10, 20) as claimed in claim 1, wherein the first region (11, 21) is in the form of a granule of the first fertiliser composition.

3. A fertiliser product (10, 20) as claimed in claim 1 or 2, wherein the second region (12, 22) contacts the first region (11, 21) over substantially the whole of its interface to the first region (11).

4. A fertiliser product (10, 20) as claimed in any preceding claim, wherein the first region (11, 21) is the only region of the product that comprises the first fertiliser composition.

5. A fertiliser product (10, 20) as claimed in any preceding claim, the fertiliser product comprising a plurality of first regions (21) comprising the first fertiliser composition, the first regions (21) being dispersed throughout the second fertiliser composition.

6. A fertiliser product (10, 20) as claimed in claim 5, wherein the plurality of first regions (21) are each in the form of granules of the first fertiliser composition.

7. A fertiliser product (10, 20) as claimed in claim 5 or 6, wherein the second region (22) contacts the plurality of first regions (21) over substantially the whole of the second region's (22) interfaces with the plurality of first regions (21).

8. A fertiliser product (10, 20) as claimed in any of claims 5 to 7, wherein the second region (22) substantially surrounds the plurality of first regions (21).

9. A fertiliser product (10, 20) as claimed in any preceding claim, wherein the first fertiliser composition is a mineral powder, or wherein the first fertiliser composition is a chipped mineral.

10. A fertiliser product (10, 20) as claimed in any preceding claim, wherein the second fertiliser composition comprises more than 30% by weight of nitrogen.

11. A fertiliser product (10, 20) as claimed in any preceding claim, wherein the second fertiliser composition is urea.

12. A fertiliser product (10) as claimed in any preceding claim, wherein the fertiliser product comprises more than 30% by weight of the first fertiliser composition.

13. A fertiliser product (10, 20) as claimed in any preceding claim, wherein the fertiliser product comprises more than 40% by weight of the second fertiliser composition.

14. A fertiliser product (10, 20) as claimed in claim 13, wherein the fertiliser product comprises more than 60% by weight of the second fertiliser composition.

15. A bulk fertiliser product comprising a plurality of the fertiliser products (10, 20) as claimed in any preceding claim.

## Patentansprüche

1. Düngerprodukt (10, 20) in der Form eines Pellets, Granulats oder Prills, wobei das Düngerprodukt Folgendes umfasst:
eine erste Region (11, 21), die eine erste Düngerzusammensetzung umfasst, wobei die erste Düngerzusammensetzung Polyhalit ist; und
eine zweite Region (12, 22), die an der Außenseite der ersten Region haftet, wobei die zweite Region (12, 22) die erste Region (11, 21) im Wesentlichen umgibt, die zweite Region (12, 22) eine zweite Düngerzusammensetzung umfasst, die zweite Düngerzusammensetzung eine Stickstoff bereitstellende Düngerzusammensetzung ist und die erste Düngerzusammensetzung in die zweite Düngerzusammensetzung eingearbeitet ist;
wobei das Düngerprodukt mehr als 20 Gewichts-% der ersten Düngerzusammensetzung umfasst und wobei das Düngerprodukt mehr als 30 Gewichts-% der zweiten Düngerzusammensetzung umfasst.

2. Düngerprodukt (10, 20) nach Anspruch 1, wobei die erste Region (11, 21) in der Form eines Granulats der ersten Düngerzusammensetzung ist.

3. Düngerprodukt (10, 20) nach Anspruch 1 oder 2, wobei die zweite Region (12, 22) die erste Region (11, 21) über im Wesentlichen die Gesamtheit ihrer Schnittstelle mit der ersten Region (11) kontaktiert.

4. Düngerprodukt (10, 20) nach einem vorhergehenden Anspruch, wobei die erste Region (11, 21) die einzige Region des Produkts ist, welche die erste Düngerzusammensetzung umfasst.

5. Düngerprodukt (10, 20) nach einem vorhergehenden Anspruch, wobei das Düngerprodukt eine Vielzahl von ersten Regionen (21) umfasst, welche die erste Düngerzusammensetzung umfasst, wobei die ersten Regionen (21) in der gesamten zweiten Düngerzusammensetzung verteilt sind.

6. Düngerprodukt (10, 20) nach Anspruch 5, wobei die Vielzahl von ersten Regionen (21) jeweils in der Form von Granulaten der ersten Düngerzusammensetzung sind.

7. Düngerprodukt (10, 20) nach Anspruch 5 oder 6, wobei die zweite Region (22) die Vielzahl von ersten Regionen (21) über im Wesentlichen die Gesamtheit der Schnittstellen der zweiten Region (22) mit der Vielzahl von ersten Regionen (21) kontaktiert.

8. Düngerprodukt (10, 20) nach einem der Ansprüche 5 bis 7, wobei die zweite Region (22) die Vielzahl von ersten Regionen (21) im Wesentlichen umgibt.

9. Düngerprodukt (10, 20) nach einem vorhergehenden Anspruch, wobei die erste Düngerzusammensetzung ein Mineralpulver ist oder wobei die erste Düngerzusammensetzung ein abgeschlagenes Mineral ist.

10. Düngerprodukt (10, 20) nach einem vorhergehenden Anspruch, wobei die zweite Düngerzusammensetzung mehr als 30 Gewichts-% Stickstoff umfasst.

11. Düngerprodukt (10, 20) nach einem vorhergehenden Anspruch, wobei die zweite Düngerzusammensetzung Harnstoff ist.

12. Düngerprodukt (10) nach einem vorhergehenden Anspruch, wobei das Düngerprodukt mehr als 30 Gewichts-% der ersten Düngerzusammensetzung umfasst.

13. Düngerprodukt (10, 20) nach einem vorhergehenden Anspruch, wobei das Düngerprodukt mehr als 40 Gewichts-% der zweiten Düngerzusammensetzung umfasst.

14. Düngerprodukt (10, 20) nach Anspruch 13, wobei das Düngerprodukt mehr als 60 Gewichts-% der zweiten Düngerzusammensetzung umfasst.

15. Massendüngerprodukt, umfassend eine Vielzahl der Düngerprodukte (10, 20) nach einem vorhergehenden Anspruch.

## Revendications

1. Produit d'engrais (10, 20) sous la forme de pastille, de granule ou de prill, le produit d'engrais comprenant :
une première région (11, 21) comprenant une première composition d'engrais, ladite première composition d'engrais étant une polyhalite ; et
une seconde région (12, 22) adhérant à l'extérieur de la première région, la seconde région (12, 22) entourant sensiblement la première région (11, 21), la seconde région (12, 22) comprenant une seconde composition d'engrais, la seconde composition d'engrais étant une composition d'engrais fournissant de l'azote, et la première composition d'engrais étant incorporée dans la seconde composition d'engrais ;
ledit produit d'engrais comprenant plus de 20 % en poids de la première composition d'engrais, et ledit produit d'engrais comprenant plus de 30 % en poids de la seconde composition d'engrais.

2. Produit d'engrais (10, 20) selon la revendication 1, dans lequel la première région (11, 21) se présente sous la forme d'un granule de la première composition d'engrais.

3. Produit d'engrais (10, 20) selon l'une des revendications 1 ou 2, dans lequel la seconde région (12, 22) est en contact avec la première région (11, 21) sur sensiblement la totalité de son interface avec la première région (11).

4. Produit d'engrais (10, 20) selon une quelconque revendication précédente, dans lequel la première région (11, 21) est la seule région du produit qui comprend la première composition d'engrais.

5. Produit d'engrais (10, 20) selon une quelconque revendication précédente, le produit d'engrais comprenant une pluralité de premières régions (21) comprenant la première composition d'engrais, les premières régions (21) étant dispersées dans la seconde composition d'engrais.

6. Produit d'engrais (10, 20) selon la revendication 5, dans lequel la pluralité de premières régions (21) se présentent chacune sous la forme de granules de la première composition d'engrais.

7. Produit d'engrais (10, 20) selon l'une des revendications 5 ou 6, dans lequel la seconde région (22) est en contact avec la pluralité de premières régions (21) sur sensiblement la totalité des interfaces de la seconde région (22) avec la pluralité de premières régions (21).

8. Produit d'engrais (10, 20) selon l'une quelconque des revendications 5 à 7, dans lequel la seconde région (22) entoure sensiblement la pluralité de premières régions (21).

9. Produit d'engrais (10, 20) selon une quelconque revendication précédente, dans lequel la première composition d'engrais est une poudre minérale, ou dans lequel la première composition d'engrais est un minéral ébréché.

10. Produit d'engrais (10, 20) selon une quelconque revendication précédente, dans lequel la seconde composition d'engrais comprend plus de 30 % en poids d'azote.

11. Produit d'engrais (10, 20) selon une quelconque revendication précédente, dans lequel la seconde composition d'engrais est de l'urée.

12. Produit d'engrais (10) selon une quelconque revendication précédente, ledit produit d'engrais comprenant plus de 30 % en poids de la première composition d'engrais.

13. Produit d'engrais (10, 20) selon une quelconque revendication précédente, dans lequel le produit d'engrais comprend plus de 40 % en poids de la seconde composition d'engrais.

14. Produit d'engrais (10, 20) selon la revendication 13, ledit produit d'engrais comprenant plus de 60 % en poids de la seconde composition d'engrais.

15. Produit d'engrais en vrac comprenant une pluralité de produits d'engrais (10, 20) selon une quelconque revendication précédente.
